# EUROPEAN PATENT APPLICATION

(11) **EP 0 532 246 A2**
(43) Date of publication of application: **17.03.1993**
(21) Application number: 92308084.0
(22) Date of filing: 07.09.1992
(51) Int. Cl.: G11B 7/09, G02B 7/04

(54) **Lens focusing method and means**

(30) Priority: 11.09.1991 US 757796
(71) Applicant: International Business Machines Corporation, Armonk, N.Y. 10504 (US)
(72) Inventor: Dente, James John, Tucson, Arizona 85715 (US); Fennema, Alan August, Tucson, Arizona 85712 (US)
(74) Representative: Burt, Roger James, Dr.

(57) **Abstract**

In a focus acquire system on an optical disk recorder, a focus error signal FES 33 has a peak amplitude of 34 at the start of a linear region 38 within which occurs a desired focus position 99. The FES 33 is modified to produce a modified FES 105 which has a peak amplitude 106 occurring closer to the desired focus position 99 than the occurrence of peak amplitude 34 of the FES. The FES 33 is differentiated to produce a differentiated FES 100. The differentiated FES 100 is then subtracted from FES 33 to produce the modified FES 105. The modified FES 105 is compared with a threshold 109 and a near-focus position is detected upon agreement at point 110. This narrows the area 107 within which in-focus position is to be found.

## Description

The present invention relates to optical systems, particularly focusing systems and the acquisition of focus in such systems. This is particularly useful for optical disk recorders.

Optical disk recorders, in particular, employ objective lens having very small size and mass. Typically, such objective lenses are slidably mounted on a movable support so that the beam passing through the objective lens is appropriately focused and positioned with respect to a record member. Generally, the acquisition of focus i.e., the movement of the objective lens to an in-focus position wherein the laser or other light beam is appropriately focused at the recording level, should be reliably accomplished to prevent retries and delays in using an optical disk recorder. Also the best focus should be quickly and accurately obtained. It is desired also to ensure that the control of the focus acquisition is simplified to reduce costs of the optical system.

One of the problems involved in accurately acquiring focus is that the focus error signal FES does not provide accurate information as to the lens out-of-focus position during initial lens motion toward the focus plane. Further, a rotating optical disk is subject to axial motions (wow) further complicating acquiring a best focus position for the lens. Because of such axial motions, a lens when at its best focus position, in maintaining such best focus moves axially with the optical disk several millimetres. The focus maintenance is achieved using a so-called linear region of the focus error signal about the best focus position. On the other hand, the depth of field of such lens is in the order of a few microns; therefore, it is desired to detect accurately and quickly a near focus condition which enables a focus servo to establish reliably and quickly focus maintaining operations. Such quick focus acquisition preferably should involve but a single reliable detection action which accommodates a large range of axial lens speeds at focus acquisition time.

US -A- 4,733,066 shows a focus acquisition system in which focus acquisition is acquired during a so-called open loop mode. Then, upon detecting an in-focus condition, a focus maintenance servo is actuated to maintain the focus of the objective lens. A control signal having a ramp shape moves the objective lens to the in-focus position.

JP -C- 1,500,995 shows amplitude detecting a focus error signal on both the leading and trailing portions about the peak amplitude. This detection system requires two separate amplitude detectors. The present invention uses a single amplitude detector for indicating a near focus condition at one extremity of a linear region of the focus error signal normally used for focus maintenance.

US -A- 4,674,076 shows using a differentiator in an optical disk servos in a negative feedback loop. This does not show or suggest modifying a focus error signal for enhancing detection of a predetermined near-focus position.

US -A- 3,883,689 shows using differentiators to differentiate focus error signals. Such differentiated focus error signals are not used to process an individual focus error signal; rather, the differentiated signals from two different cameras are differentially compared for synchronising focus between the two cameras. This does not disclose modification of a focus error signal for enhancing detection of near-focus using but a single amplitude threshold and with high reliability.

US -A- 4,368,526 shows a differentiator processing a focus error signal to a amplitude detector. The resultant amplitude detected signal is AND gated with a full-rectified focus error signal to set a flip-flop for indicating a near-focus condition. In other words, the near focus detection is based solely on the differentiated focus error signal and not a processed or modified focus error signal which maintains a linear region for focus maintenance.

The present invention provides a focus acquisition system using a single amplitude detection crossing with enhanced discrimination by slimming the focus error peak signal. It is found that this system provides a facile and inexpensive focus acquisition system which is accurate, uses minimum power, and quickly and reliably acquires focus on a repeated basis.

It is an object of the present invention to provide enhanced focus acquisition using amplitude detection and a formed focus error signal which enhances reliability of such amplitude detection.

According to the invention there is provided a method of acquiring focus of an objective lens with respect to a predetermined plane at which a light beam passing through the lens is to be focused by moving the lens along its optical axis to an in-focus position, including the steps of generating a focus error signal with a peak, and modifying the signal to produce a peak closer to the in-focus position.

From another aspect, the invention provides focus acquisition means for moving a lens along its optical axis towards an in-focus position, including a focus error detecting means for generating a focus error signal having a peak at a near-focus position, and focus circuit means for modifying the focus error signal by shifting the peak amplitude closer to the in-focus position. Other features of the invention are envisaged in the appended claims.

In an embodiment of the invention, an objective lens is moved toward an in-focus position with respect to a focal plane, i.e. such as a surface of a data storing member. A focus error signal is generated indicating an approach to a linear region of such focus error signal by a peak amplitude. Such linear region is disposed across the desired in-focus condition and is used as a parameter in maintaining any acquired focus. The focus error signal is processed for producing a modified focus error signal by moving the peak closer to a desired in-focus position of a lens being focused. A single amplitude detection on the modified focus error signal indicates that the lens being focused has reached a near focus condition which is in an extremity of the linear region. Enhanced near focus detection is achieved by also slimming the focus error peak signal at the near focus position of the lens with respect to said focal plane.

Preferably, all focus error signal processing is achieved by first differentiating the focus error signal and then subtracting the differentiated focus error signal from the focus error signal to produce a modified focus error signal having both the peak shift toward a desired in-focus position of the lens and a slimmed peak signal.

How the invention may be carried into effect is hereinafter particularly described with reference to the accompanying drawings in which:
Fig. 1 is a simplified diagram of a focusing system employing the present invention in an optical disk apparatus;
Fig. 2 shows a set of idealised wave forms used to illustrate the operation according to the invention of the apparatus of Fig. 1;
Fig. 3 is block circuit diagram of an embodiment of an in-focus detection and focus acquisition system according to the invention;
Fig. 4 is a block circuit diagram of an embodiment of a focus acquisition system according to the invention;
Fig. 5 is a circuit diagram of one embodiment of part of the embodiments of Figs. 3 and 4;
Fig. 6 is a circuit diagram of an alternative embodiment of that part;
Fig. 7 is a set of wave forms to illustrate the operation of focus acquisition with the circuit of Fig. 5 or 6; and
Fig. 8 is a set of wave forms to illustrate the operation of the circuits of Figs. 3 or 4.

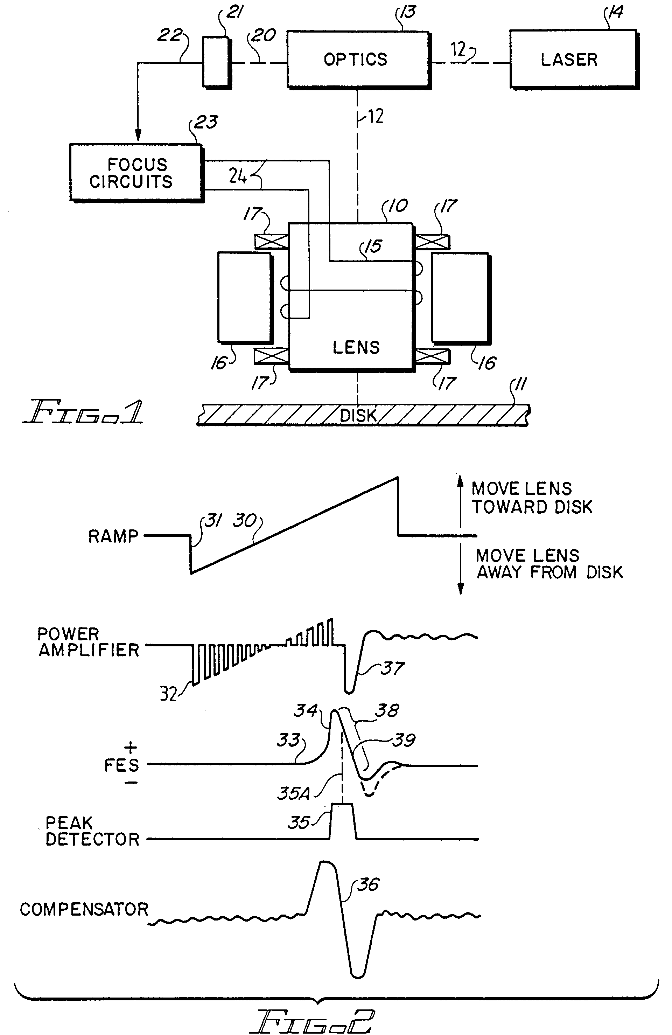

A laser 14 (Fig. 1) provides a light beam 12 to optics 13, of usual optical disk recorder design, which optically couples the laser to an objective lens 10. The objective lens 10 focuses the light beam 12 on disk 11 for recording or sensing information on the disk 11. The beam 12 is aligned with the optical axis of objective lens 10 in the usual manner. A control coil 15, mounted about the lens 10 and preferably movable therewith, generates magnetic fields which co-act with stationary magnetic fields from permanent magnet 16 which are suitably mounted on a frame (not shown). A set of bearings 17 slidably support lens 10 for movement along its optical axis. Track seeking and track following motions which are perpendicular to the optical axis of lens 10 are provided in the usual manner.

Disk 11 reflects the light supplied by the laser 14 through objective lens 10 to optics 13. Optics 13 in usual manner redirects the reflected light along path 20 to focus detector 21. Focus detector 21 supplies a focus error signal FES over electrical line 22 to focus circuits 23. Focus circuits 23 are coupled to coil 15 by a pair of signal lines 24 for supplying appropriate focus control signals.

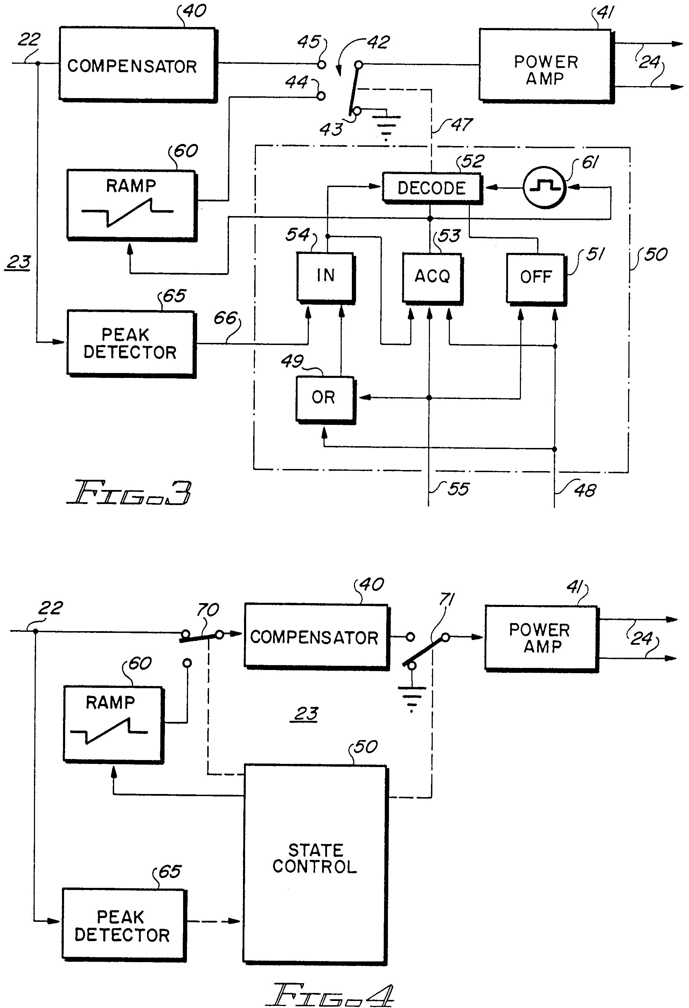

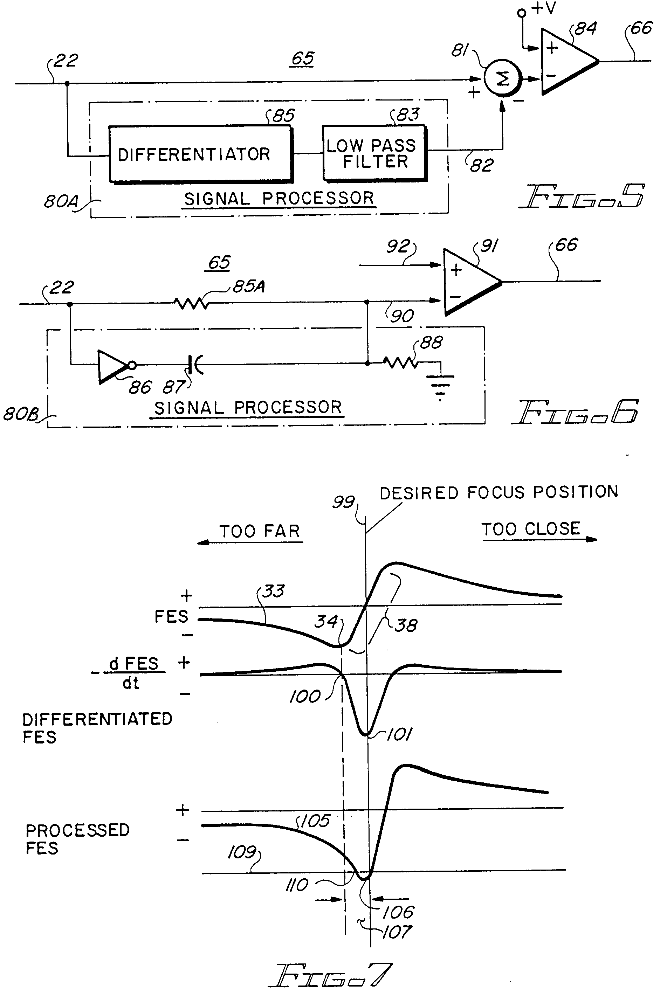

In a first embodiment of focus circuits 23 (Fig. 3) according to the invention, a focus error signal FES on line 22 is supplied to compensator 40 which provides a modification function 36 (Fig. 2) for the maintenance of in-focus conditions. A power amplifier 41 (Fig. 3) supplies the signals over the lines 24 to the focus control coil 15. An electronic switch 42 connected to the input to the power amplifier 41 has three terminals 43, 44 and 45. With the switch on terminal 43, the power amplifier 41 is connected to a reference voltage, such as ground potential, and no signals are supplied over lines 24, so that lens 10 is not moved. With the switch on terminal 44, the power amplifier 41 is connected to a ramp generator 60 which generates a ramp 30 (Fig. 2).

With the switch on terminal 45 (Fig. 3), the power amplifier 41 is connected to compensator 40.

The switch 42 is controlled by focus state control 50 over line 47. Upon power-on, the actual location of lens 10 is not known. A power-on reset signal is supplied over line 48 to set the OFF flip-flop 51 to the active state. OFF flip-flop 51 sends a signal to a decode circuit 52 which in turn responds by actuating switch 42 to position 43 so that the lens 10 is not inadvertently actuated during power-on sequencing. The power-on reset signal online 48 also passes through OR circuit 49 to reset in-focus indicating IN flip-flop 54 and directly to reset acquire ACQ flip-flop 53. In this machine state, lens 10 resides in an initial unknown position.

To acquire focus, that is, to move lens 10 to the in-focus position, a focus acquire signal on line 55 sets ACQ flip-flop 53 to the active condition for initiating focus acquire, passes through OR circuit 49 to reset the IN flip-flop 54 and resets OFF flip-flop 51. Resetting IN flip-flop 54 enables focus to be reacquired if focus is lost or it is desired to recalibrate and reacquire focus in error recovery procedures. As soon as ACQ flip-flop 53 is set to the active condition, three operations occur simultaneously, activating ramp generator 60, decode circuit 52 and pulse generator 61. Ramp generator 60 generates the ramp signal 30 (Fig. 2) which is initially designed to move the lens 10 to the remote out-of-focus position, and is supplied to terminal 44 (Fig. 3). Pulse generator 61 supplies pulses to decode circuit 52 which is activated by the signal from the ACQ flip-flop 53 to pass the pulses from pulse generator 61 repeatedly to actuate switch 42 to move the connections of power amplifier 41 between terminals 43 and 44 thereby generating the pulses 32 (Fig. 2). This is the second state of the three state machine control 50 (Fig. 3).

During the pulse soft movement of lens 10 from the remote auto focus position towards the in-focus position, a peak detector circuit 65 receives and monitors the focus error signal FES on line 22 to detect a peak 34 (Fig. 2). The focus error signal FES near an in-focus position 39 has a maximum peak amplitude 34 which defines a remote auto focus extremity of a focus maintenance linear region on which point 39 resides that is, a straight line 38 portion of FES. A peak signal is issued on line 66 (Fig. 3) to set IN flip-flop 54, which supplies an activating signal to decode circuit 52 which responds to actuate switch 42 to connect terminal 45 to power amplifier 41 to maintain the focus just acquired. IN flip-flop 54, when set, also supplies a signal to the reset input of ACQ flip-flop 53 to hold it in the reset state while an in-focus condition is maintained. This is the third state of the machine control 50 when the compensator 40 is connected to provide the modification function 36 (Fig. 2) which ensures good focus acquisition.

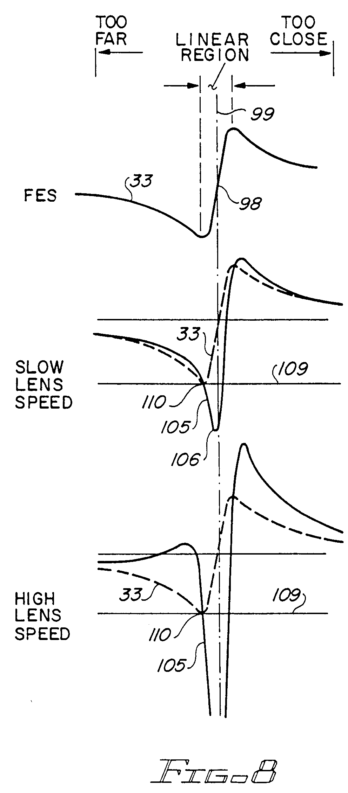

A second embodiment (Fig. 4) uses the same principles as the first embodiment but uses two electronic switches rather than a single electronic switch. Operation of the circuits 40, 41, 50, 60 and 65 is identical. One 70 connects either the focus error signal FES line 22 or the ramp generator 60 to the compensator 40. This arrangement provides for better effect of compensator 40 action represented by modification function 36 (Fig. 2). During focus-acquire, state control logic 50 (Fig. 3) supplies an actuating signal to electronic switch 70 to move it to connect ramp generator 60 to compensator 40. The other switch 71 connects either the compensator 40 or a reference potential (ground) to power amplifier 41. The generation of pulses 32 (Fig. 2) is achieved by switch 71 (Fig. 3) which is pulsed by state control 50. In the reset or initial power-on state, the state of switches 70 and 71 is not known. The off-control state of control 50 moves switch 71 to the ground reference potential and switch 70 to the line 22. Upon starting focus acquire, switch 70 is actuated to couple ramp generator 60 to compensator 40 and switch 71 modulates the signal by momentary actuations by state control 50. Upon acquiring focus, as indicated by peak detector 65, state control 50 actuates switch 70 to connect FES line 22 directly to compensator 40 and actuates switch 71 to couple compensator 40 to power amplifier 41.

The open loop position control signal 30 (Fig. 2) in the shape of a ramp which is designed to move the objective lens 10 toward the disk 11 to acquire focus of the laser 14 beam. Initially, at reverse step 31 lens 14 is moved by signal 30 to a most remote position, i.e., furthest position away from disk 11 which is a clear out-of-focus condition as indicated by the flat portion 33 of FES. Ramp 30 is modulated by position control pulses 32. The position control pulses 32 momentarily and repeatedly urge the lens 10 to move closer to the in-focus position, i.e., away from the position indicated by step 31. The lens 10 is allowed to coast between each successive pulse 32, thereby providing a soft control of the lens 10 movement within bearings 17. The pulse control tends to overcome any stiction or friction which would cause lens 10 to bind and tend not to move toward disk 11. Intermediate lens 10 coasting prevents accumulation of difference between the actual lens 10 position and the desired position indicated by ramp 30. Pulses 32 are modulated within the power amplifier.

The focus error signal at 33 indicates a complete out-of-focus condition. Positive excursion indicates an approach to the in-focus position at point 39. The peak 34 is detected resulting in a peak detected output signal 35 from detector 65. Practising the present invention has the effect of time delaying or shifting the signal used to detect near focus, that is, the leading edge of output pulse 35 is shifted spatially to dashed line 35A. Line 35A is closer to the desired in-focus position. Upon detection of near focus as indicated by pulse 35, stopping or reversing pulse 37 stops the lens 10 within the focus maintenance zone of point 39 so that the focus maintenance servos (not shown) maintain the focus of the lens at point 39.

A peak detector 65 (Fig. 5) for practising the invention in a preferred form, includes a signal processor 80A which receives FES from line 22. In the signal processor 80A, differentiator 85 receives FES 33 (Fig. 7) and produces a differentiated FES 100. A low pass filter 83 (Fig. 5) may be added to remove high frequency noise generated in signal processor 80A. Signal processor 80A is described by a LaPlace transform As/(s+p).

In the transform "A" is a gain factor, "s" is the transform variable and "p" is the pole of the transfer function of signal processor 80A. The differentiated FES on line 82 is applied to the negative input of summing circuit 81 to be subtracted from FES on line 22 applied to the positive input of summing circuit 81. From the summing circuit 81, the processed signal 105 (Fig. 7) is applied to the negative input of signal comparator 84 (Fig. 5) to be compared with threshold voltage +V or threshold 109 (Figs. 7). The output signal of comparator 84 supplied over line 66 is a pulse occurring whenever the amplitude of threshold 109 is first exceeded by the amplitude of the processed FES to indicate arrival of the lens 10 into the linear region 38.

Another peak detector 65 for practising the invention includes a signal processor 80B (Fig. 6). FES on line 22 travels through resistor 85A to signal node 90. Node 90 is at the negative input to switching comparator 91. FES also is applied to signal processor 80B which consists of a signal inverter 86 and a differentiator consisting of capacitor 87 and resistor 88. The node 90 is connected to between capacitor 87 and resistor 88 which is connected to ground. The negative differentiated FES is applied to node 90 whereat it is subtracted from FES on line 22 to produce the modified FES 105 (Fig. 7) at node 90 (Fig. 6). The modified FES is and applied to comparator 91 and compared with a suitable threshold signal 109 (Fig. 7) applied to comparator 91 (Fig. 6) over line 92. The switching comparator 91 output pulse travels over line 66 to indicate arrival of the lens in the linear region 38. When FES is differentially carried by two signal lines, rather than by a single ended line 22, then one of the two electrical conductors of the differential pair of conductors is line 22 and signal inverter 86 is replaced by the second of the two electrical conductors.

In operation, the negative differentiated FES (dFES/dt) 100 (Fig. 7) has a peak amplitude 101 coinciding with the desired in-focus position 99. The modified FES 105 whether on line 82 (Fig. 5) or at node 90 (Fig. 6) has a peak amplitude at 106 which is closer to the desired in-focus position 99 by a distance 107 from the peak 34 of FES. This shift in the spatial location of the peak amplitude places peak 106 within linear region 38. The peak portion of modified FES 105 is made more slim or narrower, as at threshold detection point 110, than the FES. The narrower peak portion enables amplitude detection at a given amplitude threshold 109 to occur closer to the actual peak 106 than if the FES without signal narrowing were used. The amplitude threshold 109 is selected to provide detection of a near focus condition (lens 10 is in one extremity of linear region 38) so that a single amplitude threshold detection at point 110 indicates reliably, quickly and easily a near focus condition and so that focus maintenance servos can now move the lens reliably to the desired focus position of lens 10.

In Figs. 7 and 8, moving to the left of line 99 indicates that lens 10 is too far from disk 11 for best focus while moving to the right of line 99 indicates lens 10 is too close to disk 11 for best focus.

Fig. 8 illustrates the results of applying the focus acquire system and method according to the invention to an optical disk device. If the lens 10 is moved at a relatively slow speed along its optical axis transverse to the focal plane of lens 10 on disk 11, the negative processed FES amplitude is at its lowest value. The peak 106 is still well within linear region 38 resulting in reliable detection of the near focus condition. Similarly, at high lens speed, the negative processed FES has a much larger amplitude, but detection point 110 is still within an extremity of linear region 38. Accordingly, using the focus acquire technique according to the invention enables greater tolerances in controlling focus-acquiring motions of lens 10 along its optical axis as lens 10 approaches the focal plane on disk 11.

There has been described an optical device having an optical record medium and optics for sending and receiving a light beam to and from the record medium, the optics including a lens movable along its optical axis toward and away from the record medium for focusing the light beam at the record medium, a lens position control means coupled to the lens for moving same along its optical axis for focusing the light beam at a focal plane of the record medium, focus detection means optically coupled to the lens for receiving light reflected from the record medium for indicating focus error as a focus error signal FES, focus correction means coupled to the focus detection means and to the control means for responding to the indicated focus error for actuating the control means to move the lens toward a best focus position whereat the light beam is focused at the focal plane, and focus acquisition means coupled to the focus correction means, to the focus detection means and to the control means for overriding the focus correction operation to move the lens toward the best focus position including a signal processor for modifying the FES by shifting a peak amplitude of FES toward the best focus position. Such a device includes a differentiator means for differentiating the FES to produce a differentiated FES, and signal summing means connected to the differentiator means for receiving the differentiated FES, and receiving the FES, for subtracting the differentiated FES from the received FES to produce a modified FES. The described device may also include stopping means connected to respond to detection and indication of a near-focus condition to actuate momentarily lens moving means to brake the lens motion to acquire focus, and focus maintenance means for actuating the moving means to maintain focus after the stopping means has actuated to brake the lens motion.

While the invention has been particularly shown and described with reference to preferred embodiments thereof, it will be understood by those skilled in the art that various changes in form and details may be made therein without departing from the scope of the invention:

## Claims

1. A method of acquiring focus of an objective lens with respect to a predetermined plane at which a light beam passing through the lens is to be focused by moving the lens along its optical axis to an in-focus position, including the steps of generating a focus error signal with a peak, and modifying the signal to produce a peak closer to the in-focus position.

2. A method according to claim 1, wherein the modification comprises differentiating the focus error signal [33] and subtracting the differentiated focus error signal [100] to produce a modified focus error signal [105].

3. A method according to claim 2, including detecting a peak [106] of the modified signal [105] to indicate an in-focus condition of the lens.

4. A method according to claim 1, 2 or 3, wherein the modified signal [105] is compared with a signal amplitude threshold [109] to indicate a near-focus condition of the lens as the amplitude [110] of the modified signal exceeds the threshold before reaching the peak amplitude [106].

5. A method according to claim 1, 2, 3 or 4, including moving the lens [10] towards the focal plane to reach the in-focus position, and sensing and generating during such movement the focus error signal [33] having a peak amplitude [34] indicating onset of a linear region [38] of focus control, the peak amplitude [34] being further from the in-focus position than the peak [106] of the modified signal [105].

6. A method according to claim 5, including reducing the width to provide a slimmer modified peak signal portion in the modified signal, whereby amplitude detection occurs closer to the peak amplitude.

7. A method according to claim 5 or 6 wherein, upon detecting a near-focus condition, predetermined braking is applied to the lens to ensure in-focus capture.

8. A method according to any preceding claim, wherein, during the modifying step, the signal is subject to low band pass filtering to reject high frequency noise.

9. Focus acquisition means for moving a lens [10] along its optical axis towards an in-focus position, including a focus error detecting means [21] for generating a focus error signal [33] having a peak [34] at a near-focus position, and focus circuit means [23] for modifying the focus error signal by shifting the peak amplitude closer to the in-focus position.

10. Means according to claim 9, wherein the focus circuit means [23] includes differentiator means [85; 87, 88] to produce a differentiated focus error signal [100], and signal summing means [81; 90] to subtract the differentiated focus error signal [100] from the focus error signal [33] to produce the modified focus error signal [105].
